(19) Europäisches Patentamt
European Patent Office
Office européen des brevets

(11) Veröffentlichungsnummer: **0 214 360 A2**

(12) **EUROPÄISCHE PATENTANMELDUNG**

(21) Anmeldenummer: 86101486.8

(51) Int. Cl.[4]: **B01D 13/04**, B01D 53/22

(22) Anmeldetag: 05.02.86

(30) Priorität: 15.07.85 DE 3525235

(43) Veröffentlichungstag der Anmeldung: 18.03.87 Patentblatt 87/12

(84) Benannte Vertragsstaaten: DE FR GB IT NL SE

(71) Anmelder: GKSS Forschungszentrum Geesthacht GmbH
Max-Planck-Strasse
D-2054 Geesthacht(DE)

(72) Erfinder: Peinemann, Klaus Viktor, Dr.
Elbstrasse 111
D-2058 Lauenburg(DE)
Erfinder: Pinnau, Ingo
Norderquerweg 77
D-2050 Hamburg 80(DE)

(74) Vertreter: Gottlob, Peter
Kernforschungszentrum Karlsruhe GmbH
Stabs. Patente und Lizenzen Weberstrasse 5
D-7500 Karlsruhe 1(DE)

(54) **Verfahren zur Herstellung und Erhöhung der Selektivität einer integralasymmetrischen Membran.**

(57) Die Erfindung betrifft ein Verfahren zur Herstellung einer integralasymetrischen Membran zur Trennung von Gasen voneinander, wobei Membranbildner, Lösungsmittel und/oder ein den Membranbildner nicht lösendes Mittel gemischt, flächenhaft ausgebreitet und mit einem Fällmittel in Kontakt gebracht werden. Die der Erfindung gestellte Aufgabe besteht darin, eine integral-asymmetrische Membran zur Gastrennung herzustellen, die besonders für die $CO_2/CH_4$-Trennung eingesetzt werden kann, wobei neben der für eine wirtschaftliche Stofftrennung notwendigen Steigerung der Trennleistung bzw. Selektivität ($CO_2/CH_4$ von ca. 30 -40 und einer $CO_2$-Permeabilität von $\geq$ 0,1 $m^3/m^2hbar$) die Wasserunempfindlichkeit und Stabilität erhöht werden soll. Die Lösung ist dadurch gekennzeichnet, daß ein Polymer, insbesondere Polyethersulfon als Membranbildner und ein halogenierter Kohlenwasserstoff als Lösungsmittel sowie ein aliphatischer Alkohol mit oder ohne einer aliphatischen Carbonsäure oder einem Alkylbenzol als nichtlösendes Mittel zusammengemischt werden.

EP 0 214 360 A2

# Verfahren zur Herstellung und Erhöhung der Selektivität einer integralasymmetrischen Membran.

Die Erfindung betrifft ein Verfahren zur Herstellung und Erhöhung der Selektivität einer integralasymmetrischen Membran gemäß dem Oberbegriff des Anspruches 1.

Membranverfahren können im Vergleich zu konventionellen Gastrennverfahren wie Tieftemperaturrektifikation, chemischer und physikalischer Absorption mit geringerem Energieaufwand betrieben werden. Die Trennung eines Gasgemisches erfolgt meist isotherm, d.h. ohne Phasenwechsel. Membranverfahren zeichnen sich durch große Verfahrensflexibilität, einfache Bedienung und geringe Unterhaltungskosten aus.

Der wesentliche Kostenfaktor eines Membranverfahrens ist, neben dem Einsatz geeigneter Modulsysteme sowie entsprechender Verfahrensführung, die Wahl eines geeigneten Membranmaterials. Eine "ideale" Membran für die Gastrennung sollte folgende Eigenschaften aufweisen:

1. sehr hohe Selektivitäten bezüglich verschiedener Trennprobleme (z.b. He/$N_2$-, $H_2/N_2$-, $CO_2/CH_4$-Trennung usw.)
2. hohe Flüsse der schnelleren Permeenten - (z.B. He, $H_2$, $CO_2$)
3. möglichst geringe Plastifizierung der Membran
4. hohe Temperaturbeständigkeit
5. hohe mechanische Festigkeit
6. hohe chemische Beständigkeit; besonders gegen "Verunreinigungen" eines natürlichen Gasgemisches ($H_2O$-Dampf, $H_2S$ in Biogasen und Erdgasen)
7. gute Reproduzierbarkeit in der Membranherstellung
8. einfache und möglichst kostengünstige Herstellung.

Es ist bislang nicht gelungen, eine "ideale" Membran herzustellen, da einige Anforderungen zueinander im Widerspruch stehen. Im allgemeinen haben Membranen mit hohen Permeabilitäten (z.B. Silikone) niedrige Selektivitäten und Membranen mit hohen Selektivitäten, meistens glasartige Polymere, niedrige Permeabilitäten.

Um mit kommerziellen Membranen konkurieren zu können, müssen Membranneuentwicklungen mindestens eine Selektivität von $\alpha\,\frac{i}{j} = 20$ aufweisen. Für einen wirtschaftlichen Einsatz von Membranen zur Gastrennung sollte sogar eine Selektivität von $\alpha\,\frac{i}{j} \geq 40$ erreicht werden, bei entsprechend hohen Permeabilitäten der schneller permeierenden Komponenten (Wensley G.C., Jakabhazy S.Z.: "High Performance Gas Separations Membranes", Paper presented at American Institute of Chemical Engineers, 1984 Winter National Meeting, Atlanta, Georgia, March 11 -14, 1984).

Zur Erzielung hoher Permeabilitäten ist es wesentlich, die eigentliche Trennschicht der Membranen möglichst klein zu halten, da der Gasfluß umgekehrt proportional zur Membrandicke ist. Es sind daher mehrere Verfahren zur Erzielung einer möglichst geringen Membrandicke entwickelt worden. Die Herstellung von homogenen, symmetrischen Polymerfilmen kann in einfacher Weise durchgeführt werden: eine dünne Polymerlösung wird auf eine geeignete Unterlage gegossen oder ausgezogen. Nach Verdampfung des leicht-oder -schwerflüchtigen Lösungsmittels bildet sich auf der Unterlage ein Polymerfilm. Homogene, symmetrische Membranen mit einer Schichtdicke von $\leq 5$ µm sind jedoch schwierig handhabbar und weisen meistens Fehlstellen auf, die ihren Einsatz in der Gastrennung verhindern. Membranen, die aus glasartigen Polymeren gefertigt werden, müssen zur Erzielung wirtschaftlicher Permeabilititäten - (mindestens 0,05 $m^3/m^2$hbar) Schichtdicken von $\leq 1$ µm aufweisen. Die Herstellung homogener, symmetrischer Polymerfilme in dieser Größenordnung ist nur durch besonders aufwendige Verfahren realisierbar, da vorhandene Verunreinigungen (z.B. Staubpartikel) mit einer Größe von 3000 Å bei der Membranfertigung unvermeidbar sind (US-PS 4,320,463). Diese Partikelgröße ist ausreichend, um Fehlstellen in der Membran zu initiieren, die die Trennleistung (Selektivität) stark senken.

Ein heute weitverbreitetes Verfahren zur Herstellung von Membranen ist der Phaseninversionsprozeß, der zu integralasymmetrischen Membranen führt. Intregral-asymmetrische Membranen bestehen aus einer dünnen selektiven Schicht (ca. 0,2 -1 µm) und einem porösen Unterbau, der der Membran die mechanische Stabilität gibt. Ein wesentlicher Vorteil dieser Methode ist die relativ einfache Fertigung und die Möglichkeit, Membranen mit unterschiedlichen Strukturen und daher veränderten Trenneigenschaften, herzustellen.

Die größte Schwierigkeit ist, genau wie bei homogenen, symmetrischen Membranen, die Bildung einer absolut fehlstellenfreien, selektiven Schicht. Die einzige kommerziell verwendete integral-asymmetrische Phaseninversionsmembran, die aufgrund ihrer fehlstellenfreien selektiven Schicht für die Gastrennung eingesetzt werden kann, ist eine Celluloseacetatmembran, die ursprünglich für die Meerwasserentsalzung entwickelt worden war (Envirogenics, Separex). Obwohl die Celluloseacetat (CA-)membranen über gute Trenneigenschaften (besonders für $CO_2/CH_4$-Trennung) verfügen, ist ihr Einsatz zur Gastrennung durch folgende Nachteile gekennzeichnet:

1. Empfindlichkeit gegen kondensiertes Wasser (irreversible Zerstörung)

2. Empfindlichkeit gegen mikrobiologischen Angriff

3. Plastifizierung der CA-Membranen, besonders bei der $CO_2$-Trennung

4. geringe Temperaturbeständigkeit (bis ca. 70°C)

5. relativ aufwendige Herstellung, da die CA-Membran nicht direkt an der Luft getrocknet werden können, da sonst der poröse Unterbau kollabiert: Die Trocknung erfordert einen Lösungsmittelaustausch.

Die aufgelisteten Nachteile der CA-Membranen setzen die Trenneigenschaften z.T. stark herab. In Anbetracht dieser Schwierigkeiten hat es nicht an Versuchen gefehlt, integralasymmetrische Gastrennmembranen aus anderen Polymeren zu fertigen. Es ist jedoch nicht möglich aus jedem Polymer, mit guten materialspezifischen Trenneigenschaften, integralasymmetrische Membranen herzustellen. So müßte z.B. Kapton, ein Polyimid, besonders zur Trennung von $CO_2/CH_4$ (Chern R.T., Koros W.J., Hopfenberg H.B., Stannett V.T.: "Material Selection for Membrane-Based Gas Separations" in Material Science of Synthetic Membranes, ACS Symposium Series Vol. 269, Ed.Douglas R.Lloyd, American Chemical Society, Washington, D.C. 1985) verwendbar sein (sehr hohe Selektivität, sehr hohe Temperaturbeständigkeit und mechanische Stabilität). Da Kapton jedoch praktisch unlöslich ist, können daraus keine Phaseninversionsmembranen mit den üblichen Techniken hergestellt werden.

Andere geeignete Polymere, Polysulfone und lösliche Polyimide, die jedoch nicht kommerziell erhältlich sind, können als Gastrennmembranen hergestellt werden. Sie sind jedoch noch nicht über den Labormaßstab hinaus gefertigt worden, da sie zwar verbesserte Chemikalien-, Temperatur-und mechanische Beständigkeit aufweisen, jedoch besonders für die $CO_2/CH_4$-Trennung keine wesentlich verbesserten Trenneigenschaften haben. Aus den nachfolgenden Tabellen 1 und 2 sind die Trenneigenschaften verschiedener integralasymmetrischer Phaseninversionsmembranen zur Gastrennung widergegeben:

| Gas | Celluloseacetat ($m^3/m^2hbar$) | Polysulfon** ($m^3/m^2hbar$) | Polyimid ($m^3/m^2hbar$) |
|---|---|---|---|
| He | 0,80 | 0,50 | 0,51 |
| $H_2$ | 0,64 | 0,39 | 0,27 |
| $CO_2$ | 0,23* | 0,20* | 0,05* |
| $CH_4$ | 0,0084 | 0,0080 | 0,0015 |
| $N_2$ | 0,0084 | 0,0053 | 0,0018 |

Tabelle 1: Permeabilität verschiedener Gase für intergral-asymmetrische Phaseninversionsmembranen zur Gastrennung bei 22°C

* Werte auf einen angewendeten Druck von O interpoliert

** nicht kommerziell erhältliches Polymer (Entwicklungsprodukt von Envirogenics)

| Ideale Selektivität | Celluloseacetat | Polysulfon** | Polyimid |
|---|---|---|---|
| $\alpha^* CO_2/CH_4$ | 27 | 25 | 33 |
| $\alpha^* CO_2/N_2$ | 27 | 38 | 28 |
| $\alpha^* He/N_2$ | 95 | 94 | 284 |

Tabelle 2: Ideale Selektivitäten integral-asymmetrischer Phaseninversionsmembranen

Envirogenics gibt an (Stand März 1984), daß es zur Zeit keinen kommerziell erhältlichen Kunststoff gibt, der für die $CO_2/CH_4$-Trennung eine ideale Selektivität von 40 erreicht, der für die Herstellung integral-asymmetrischer Membranen geeignet ist.

Die der Erfindung gestellte Aufgabe besteht nunmehr darin, eine integral-asymmetrische Membran zur Gastrennung herzustellen, die besonders für die $CO_2/CH_4$-Trennung eingesetzt werden kann, wobei neben der für eine wirtschaftliche Stofftrennung notwendigen Steigerung der Trennleistung bzw. Selektivität ($CO_2/CH_4$ von ca. 30 -40 und einer $CO_2$-Permeabilität von $\geq$ 0,1 $m^3/m^2hbar$) die Wasserunempfindlichkeit und Stabilität erhöht werden soll.

Die Lösung ist in den kennzeichnenden Merkmalen des Anspruches 1 beschrieben.

Die weiteren Ansprüche stellen vorteilhafte Weiterbildungen, Anwendungsbeispiele und Ausführungsformen der Erfindung dar.

Gemäß der Erfindung wird demnach z.B. mit dem Kunststoff Polyethersulfon ein Polymer derart einsetzbar, daß gute Selektivitätseigenschaften für die Trennung von $CO_2/CH_4$-Gemischen sowie der leichteren Gase wie Helium und Wasserstoff von - schweren Gasen wie Stickstoff, Methan und Kohlenmonoxid daraus resultieren.

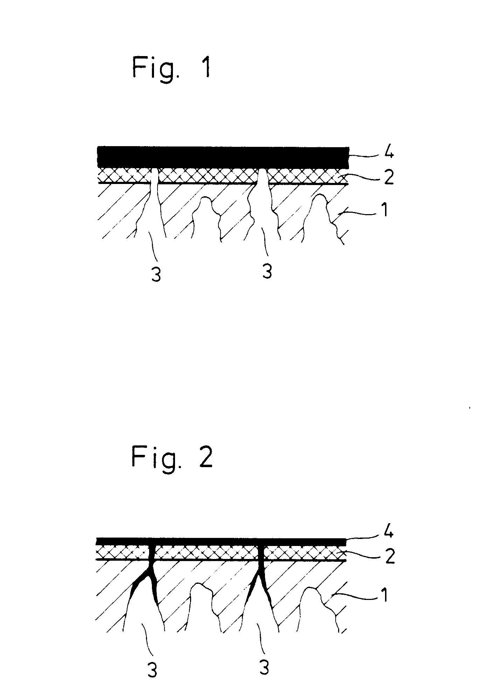

Die Erfindung wird im folgenden anhand von Ausführungsbeispielen, Tabellen 3 -9 sowie den Figuren 1 und 2 näher erläutert.

Überraschenderweise wurde nämlich gefunden, daß die integralasymmetrische Membran mit nahezu fehlstellenfreier Haut (ca. 0,1 µm -0,3 µm)- gefertigt werden kann, indem eine Lösung von Polyethersulfon in einem Lösungsmittelsystem hergestellt wird, welches ein flüchtiges, starkes Lösungsmittel und ein schwächeres - schwerflüchtiges Lösungsmittel für das Polymer enthält und außerdem mindestens ein Nichtlösungsmittel, das als porenbildendes Medium wirkt. Die Lösung kann mit Hilfe üblicher Techniken zu einem Film bestimmter Dicke ausgezogen werden. Nach einer bestimmten Verweilzeit der ausgezogenen Membran an der Luft, verdampft eine ausreichende Menge des leichtflüchtigen Lösungsmittels. Die auftretende Phaseninversion ist durch eine Trübung der Membran ersichtlich. Die so strukturierte Polyethersulfonmembran wird anschließend in einer organischen Flüssigkeit - (Nichtlösungsmittel für PES) gefällt, um die Struktur zu fixieren und die restlichen schwerflüchtigen Lösungsbestandteile zu entfernen. Die feuchte Membran kann danach an der Luft getrocknet und als Gastrennmembran mit guter Selektivität und Fluß eingesetzt werden.

Mit einer bekannten Beschichtungsmethode - (s.Fig. 1) kann die Selektivität, bei geringer Flußabnahme, noch gesteigert werden. Hierzu wird auf die mikroporöse Stützschicht 1 mit selektiver Membranhaut 2 aus gleichem Material und den durchgehenden Fehlstellen 3 eine Silikonbeschichtung 4 von ca. 1 µm Dicke aufgebracht. Diese Beschichtungsmethode erfordert jedoch einen zusätzlichen Arbeitsgang in der Herstellung, da die Membranen erst nachträglich, im getrockneten Zustand, beschichtet werden.

In Erweiterung des Erfindungsgedankens wurde daher diese Methode für eine in situ -Beschichtung gem. Fig. 2 konditioniert. Durch Zugabe eines im Fällungsbad löslichen Polymers in sehr geringer Konzentration konnte erreicht werden, daß die wenigen in der Membranhaut 2 vorhandenen Fehlstellen 3 durch dieses Polymer in Form einer Schicht 5 von ca. 0,1 µm blockiert werden, wobei das Polymer von der Schicht 4 aus in die Fehlstellen 3 eindringt. Mit dieser Methode konnte die Selektivität der integral-asymmetrischen PES-Membranen gesteigert werden. Im Vergleich mit der im US-PS 4,230,463 beschriebenen Elastomerbeschichtung (Fig. 1) ist die Filmdicke auf der Membranhaut 2 wesentlich kleiner und die in der Membranhaut 2 vorhandenen Poren 3 sind vollständig polymergerfüllt.

Die erfindungsgemäßen Polyethersulfonmembranen sind den zur Zeit erhältlichen kommerziellen Gastrennmembranen zur Trennung von $CO_2/CH_4$-Gemischen bezüglich der Selektivität überlegen. Die $CO_2$-Permeabilität erreicht wirtschaftliche Bereiche. Wie die Beispiele 1 und 4 zeigen, können die Membranen aber auch sehr gut für die Abtrennung von Wasserstoff von Stickstoff (oder Kohlenmonoxid) und für die Heliumabtrennung von Methan oder Stickstoff eingesetzt werden.

Für die in den folgenden Beispielen verwendeten dimensionslosen Größen ideale Selektivität $\alpha^*$, reale Selektivität $\alpha$ und Trennfaktor $\beta$ bedarf es einer Definition.

Die ideale Selektivität $\alpha^*$ wird mit reinen Gasen ermittelt. Bei einer Druckdifferenz über der Membran $\Delta p_i$ wird die Menge eines Gases i bestimmt, die pro Zeiteinheit durch die Membran strömt. Diese Gasmenge $Q_i$ wird durch die Druckdifferenz $\Delta p_i$und durch Membranfläche F geteilt und es resultiert die Permeabilität

$$P_i^{ideal} = \frac{Q_i}{F \cdot \Delta p_i}$$

Die Permeabilität eines zweiten Gases $P_j^{ideal}$ wird in gleicher Weise bestimmt (bei gleicher Druckdifferenz, d.h. $p_i = p_j$) Für die ideale Selektivität gilt:

$$\alpha_j^{i*} = \frac{P_i^{ideal}}{P_j^{ideal}}$$

Die reale Selektivität $\alpha$ wird mit Gasgemischen ermittelt. Aus der Permeatanalyse werden die Gasmengen $Q_i$ und $Q_j$ berechnet, die pro Zeiteinheit durch die Membran strömen. Wird die Gasmenge $Q_i$ durch die Membranfläche und die Partialdruckdifferenz $\Delta p_i$ geteilt, resultiert die Permeabilität $p_i^{real}$. Durch Bestimmung der Permeabilität des zweiten Gases $p_j^{real}$ kann die reale Selektivität berechnet werden:

$$\alpha_j^i = \frac{P_i^{real}}{P_j^{real}}$$

In den aufgeführten Beispielen mit Gasgemischen wurden die Versuche praktisch entnahmefrei durchgeführt, d.h. die Zusammensetzung von Feed und Retentat unterschied sich nur unwesentlich.

Für den Trennfaktor $\beta$ gilt folgende Definition

$$\beta_j^i = \frac{(p_i''/p_j'')}{(p_i'/p_j')}$$

$p_i''$ und $p_j''$ sind die Partialdrücke auf der Permeatseite,

$p_i'$ und $p_j'$ sind die Partialdrücke auf der Hochdruckseite.

Bei einem Zweistoffgemisch besteht zwischen der realen Selektivität und dem Trennfaktor folgender Zusammenhang:

$$\beta_j^i = \alpha_j^i \cdot \frac{1-(p_i''/p_j'')}{1-(p_i'/p_j')}$$

Der Trennfaktor β ist also eine Funktion der membranspezifischen Größe α und des versuchsspezifischen Druckverhältnisses Permeatdruck zu Feeddruck.

Die erfindungsgemäß angewendete Gießlösung besteht aus einem Polymer (Polyethersulfon), mindestens einem Lösungsmittel sowie mindestens einem Nichtlösungsmittel für PES.

Das Polymer:

Zur Herstellung integral-asymmetrischer Polyethersulfonmembranen sind grundsätzlich alle handelsüblichen Polyethersulfone folgender Struktur einsetzbar:

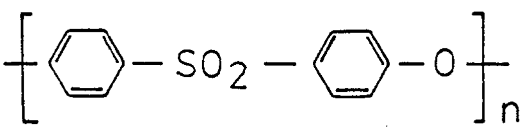

Die kommerziell erhältlichen Typen ("Victrex" Hersteller ICI, "Ultrason E" Hersteller BASF) unterschieden sich in ihrer Form (Pulver, Granulat), Viskosität und Chemikalienbeständigkeit. Aufgrund der Vielzahl der angebotenen Typen können sehr unterschiedliche Gießlösungen hergestellt werden, die sich bei sonst gleichen Bestandteilen und Konzentrationen, vor allem in ihrer Viskosität unterscheiden. Dieses wäre bei der Herstellung verschiedener Membranformen (Flach-, Schlauch-oder Hohlfasermembranen) ein wesentlicher verarbeitungstechnischer Vorteil. Der PES-Gehalt der Gießlösung kann zwischen 8 und 30 Gew.-% liegen. Andere strukturell ähnliche Polyethersulfone, die in einem der folgenden Lösungsmittel löslich sind, sind ebenso verwendbar.

Das Lösungsmittelsystem:

Als Lösungsmittel werden halogenierte Kohlenwasserstoffe eingesetzt, insbesondere Dichlormethan und 1,1,2-Trichlorethan. Als besonders günstig erwiesen sich Lösungsmittelgemische, insbesonders Dichlormethan/1,1,2-Trichlorethan, Dichlormethan/Chloroform und Dichlormethan/Chloroform/1,1,2-Trichlorethan. Das Lösungsmittel mit dem niedrigsten Siedepunkt wird im folgenden als Hauptlösungsmittel bezeichnet.

Das Nichtlösungsmittelsystem:

Die Gießlösung muß mindestens einen porenbildenden Stoff enthalten, der ein Nichtlösungsmittel für PES ist. Dieses Nichtlösungsmittel sollte einen Siedepunkt haben, der mindestens 20°C über dem des Hauptlösungsmittels liegt. Als Nichtlösungsmittel können verwendet werden:

-Carbonsäuren, insbesonders Ameisensäure und Essigsäure

-aliphatische Alkohole, insbesonders Propanol-1, Propanol-2, Butanol-1, Butanol-2

-cyclishe Alkohole, insbesonders Cychlohexanol

-Alkylbenzole, insbesonders Xylol und Toluol

Der Gehalt an Nichtlösungsmittel in der Gießlösung kann zwischen 3 und 25 Gew.-% liegen. Die Konzentration sollte möglichst hoch gewählt werden, da mit steigendem Nichtlösungsmittelgehalt die Dicke der aktiven Schicht abnimmt. Andererseits ist durch Variation der Nichtlösungsmittelkonzentration die Kinetik des Phaseninversionsprozesses und damit die Struktur der Membran wesentlich veränderbar.

Wahl des Fällungsmittels:

Als Membranfällungsmittel können alle organischen Flüssigkeiten verwendet werden, die für PES Nichtlösungsmittel sind. Das Fällungsmittel muß mit allen flüssigen Bestandteilen der Gießlösung vollständig mischbar sein. Der Siedepunkt des Fällungsmittels sollte möglichst niedrig sein, um die Trocknung der gefertigten Membranen zu erleichtern. Als besonders günstiges Fällungsmittel hat sich Methanol erwiesen.

Die Trenneigenschaften der in Methanol gefällten PES-Membranen können durch einen Zusatz im Fällbad gesteigert werden. Als Zusatzmittel sind alle methanollöslichen Polymere verwendbar. Die Fällungskinetik der PES-Membranen darf nicht wesentlich durch den Zusatzstoff beeinträchtigt werden. Die feuchten Membranen können an der Luft getrocknet werden. Nach entsprechender Trocknungszeit bildet sich auf beiden Membranoberflächen ein dünner Film des Zusatzstoffes. Vorhandene Fehlstellen der PES-Membranen werden mit Hilfe des Films überdeckt bzw. verstopft. Damit die Permeabilität der schnelleren Permeenten nicht zu stark ver mindert wird, muß die Konzentration des Zusatzstoffes im Fällungsbad niedrig sein. Je nach Art des Zusatzstoffes ist die Konzentration im Fällungsbad zu variieren. Im Gegensatz zur Silikonbeschichtung erfolgt die. Verstopfung der Fehlstellen in einem Arbeitsgang. Als Zusatzstoffe können alle methanollöslichen Polymere eingesetzt werden, insbesondere Ethylcellulose, Celluloseacetat-propionat und Celluloseacetat-butyrat.

Beispiel 1

| | |
|---|---|
| Polyethersulfon "Victrex 5200 G | |
| oder "Ultrason E 3000" .... | 14,4 Gew.-% |
| Dichlormethan......................... | 47,9 Gew.-% |
| 1,1,2-Trichlorethan.................. | 24,0 Gew.-% |
| Ameisensäure.......................... | 6,0 Gew.-% |
| Butanol-2............................. | 7,7 Gew.-% |

Die Lösung wurde mit Hilfe einer Hochdruckzelle filtriert, anschließend ca. 1 h stehengelassen zur Entfernung der Luftbläschen und die klare Gießlösung bei 20°C mit einem Ziehschlitten zu einem 250 -300 µm dicken Film auf Glasplatten ausgezogen. Nach kurzer Abdampfzeit (ca. 5 -10 sec.) und einer deutlichen Trübung des Films, wurde die so erhaltene feuchte Membran in ein Methanolbad. von 16°C getaucht. Die Trocknung der Membranen erfolgt danach bei Raumtemperatur.

Ein Teil der Membranen wurde mit den reinen Gasen Helium, Kohlendioxid und Stickstoff bei 5 bar auf ihre Permeabilitäten untersucht und der andere Teil der Membranen zu Membrankissen verschweißt (jeweils 2 Membranen, selektive Schicht außen). Die Membrankissen wurden in eine mit Petrolether verdünnte Silikonlösung getaucht. Nach Verdampfung des Petrolethers bildete sich auf der selektiven Haut eine dünne Silikonschicht. Die Vernetzungsdauer des Silikons beträgt ca. 1 Tag. Anschießend erfolgte der Test der auseinander geschnittenen Kissen mit den o.g. Gasen bezüglich ihrer Selektivität. Die aus den Messungen resultierenden Ergebnisse zeigt Tabelle 3.

| | Permeabilitäten ($m^3/m^2hbar$) | | | Selektivitäten (-) | |
|---|---|---|---|---|---|
| | He | $CO_2$ | $N_2$ | $\alpha^*\frac{He}{N_2}$ | $\alpha^*\frac{CO_2}{N_2}$ |
| PES-Membranen unbeschichtet | 0,295 | 0,196 | 0,00482 | 61 | 41 |
| PES-Membranen mit Silikon | 0,270 | 0,170 | 0,00265 | 102 | 64 |

Die Resultate von Tabelle 3 zeigen, daß durch eine Silikonbeschichtung eine erhebliche Selektivitätszunahme erreichbar ist, bei geringerer Flußabnahme der schnelleren Permeenten.

Die silikonbeschichteten Membranen wurden auch mit $CO_2/CH_4$-Gemischen bei 5 bar und 20°C getestet (Membranfläche 0,00342 m²), dies zeigt Tabelle 4.

| | Druck (bar) | Volumenstrom ($m^3/h$) | Konzentration (% $CO_2$) | (% $CH_4$) |
|---|---|---|---|---|
| Feed | 6 | 0,0261 | 52,54 | 47,46 |
| Retentat | 6 | 0,0254 | 51,37 | 48,63 |
| Permeat | 1 | 0,0008 | 97,28 | 2,72 |

| | Permeabilität ($m^3/m^2hbar$) | Selektivität (-) | Trennfaktor (-) |
|---|---|---|---|
| $CO_2$ | 0,10378 | $\alpha CO_2/CH_4$=47,6 | $\beta CO_2/CH_4$=33,1 |
| $CH_4$ | 0,00218 | | |

Anhand der folgenden Beispiele soll der wesentliche Einfluß der einzelnen Gießlösungsbestandteile verdeutlich werden:

Beispiel 2:

Lösung A:

| | |
|---|---|
| Polyethersulfon "Ultrason E 3000" | 14,3 Gew.-% |
| Dichlormethan | 71,4 Gew.-% |
| Ameisensäure | 7,1 Gew.-% |
| Butanol-1 | 7,2 Gew.-% |

Methanolfällung

Lösung B:

| | |
|---|---|
| Polyethersulfon "Ultrason E 3000" | 14,4 Gew.-% |
| Dichlormethan | 47,9 Gew.-% |
| 1,1,2-Trichlorethan | 24,0 Gew.-% |
| Ameisensäure | 6,0 Gew.-% |
| Ethanol | 7,7 Gew.-% |

Methanolfällung

| | | |
|---|---|---|
| <u>Lösung C:</u> | Polyethersulfon "Ultrason E 3000" .... | 14,4 Gew.-% |
| | Dichlormethan ...................... | 47,9 Gew.-% |
| | 1,1,2-Trichlorethan ................ | 24,0 Gew.-% |
| | Ameisensäure ....................... | 6,0 Gew.-% |
| | Butanol-1 .......................... | 7,7 Gew.-% |

Methanolfällung

Alle Membranen wurden mit Silikon beschichtet und getestet wie unter Beispiel 1 (5bar und 20°C). Tabelle 5 zeigt die Ergebnisse:

| Lösung | $CO_2$-Permeabilität ($m^3/m^2hbar$) | Selektivität $\alpha*CO_2/N_2$ |
|---|---|---|
| A | 0,026 | 59 |
| B | 0,076 | 40 |
| C | 0,196 | 65 |

Der Vergleich der Daten von Lösung A und C zeigt den erheblichen Einfluß eines zweiten, sekundären Lösungsmittels, dessen Siedepunkt höher als der des Hauptlösungsmittel ist. Durch Zugabe eines sekundären Lösungsmittels können die Permeabilitäten der schnelleren Permeenten wesentlich erhöht werden, bei gleichen Selektivitäten.

Im Vergleich zur Lösung C wurde bei Lösung B ein anderes Nichtlösungsmittel, bei sonst gleichen Bestandteilen und Konzentrationen in der Gießlösung, verwendet. Sowohl die Selektivität als auch die Permeabilität nimmt stark ab.

Im Beispiel 1 wurde der Einfluß der Silikonbeschichtung erläutert (erhöhte Selektivität bei geringer Permeabilitätsab abnahme). Die Ergebnisse der unbeschichteten PES-Membranen von Beispiel 1 zeigen jedoch im Vergleich mit den silikonbeschichteten Membranen von Beispiel 2 Lösung B, daß eine geeignete Gießlösung den größten Einfluß auf die Trenneigenschaften einer PES-Gastrennmembran hat. Die Silikonbeschichtung ist daher besonders sinnvoll bei Membranen, die schon unbeschichtet gute Trenneigenschaften aufweisen.

Beispiel 3:

Gießlösung wie Beispiel 1

Fällungsbad: 2,5 g/l Celluloseacetat-propionat

Die Trenneigenschaften der erhaltenen Membranen sind aus Tabelle 6 ersichtlich (Meßbedingungen 5 bar und 20°C)

| Permeabilitäten ($m^3/m^2$hbar) | | Selektivitäten (-) |
|---|---|---|
| He | 0,2810 | $\alpha^{*}\ \frac{He}{N_2} = 117$ |
| $CO_2$ | 0,1360 | |
| $N_2$ | 0,0024 | $\alpha^{*}\ \frac{CO_2}{N_2} = 57$ |

In einer einstufigen Permeation wurden die Trenneigenschaften für Gasgemische bei 5 bar und 20°C untersucht. Die Ergebnisse sind aus Tabelle 7 ersichtlich:

| | Druck (bar) | Volumenstrom ($m^3$/h) | Konzentration (% $CO_2$) | (% $CH_4$) |
|---|---|---|---|---|
| Feed | 6 | 0,0370 | 48,85 | 51,15 |
| Retentat | 6 | 0,0357 | 47,32 | 52,68 |
| Permeat | 1 | 0,0013 | 95,84 | 4,160 |

| | Permeabilität ($m^3/m^2$hbar) | Selektivität (-) | Trennfaktor (-) |
|---|---|---|---|
| $CO_2$ | 0,1951 | $\alpha CO_2/CH_4$=36,7 | $\beta CO_2/CH_4$=24,9 |
| $CH_4$ | 0,0053 | | |

Beispiel 4:

Es wurde ein Polyethersulfon mit geringerer Viskosität verwendet. Das Fällbad war eine 0,4 %-ige Lösung von Ethylcellulose (Ethocel Med. 50, Dow Chemical) in Methanol. Die Membranen wurden bei 18°C gefällt.

Rezeptur der Gießlösung:

| | |
|---|---|
| Polyethersulfon "Victrex 4800 P" ..... | 14,4 Gew.-% |
| Dichlormethan ........................ | 47,8 Gew.-% |
| 1,1,2-Trichlorethan .................. | 23,9 Gew.-% |
| Ameisensäure ......................... | 6,0 Gew.-% |
| Butanol-1 ............................ | 7,9 Gew.-% |

Die Trenneigenschaften der Membranen zeigt Tabelle 8 (Meßbedingungen 3,5 bar und 20°C):

| Gas | Permeabilitäten ($m^3/m^2hbar$) | Selektivitäten |
|---|---|---|
| $H_2$ | 0,4030 | $\alpha^* \frac{H_2}{CH_4} = 90$ |
| $CO_2$ | 0,2650 | |
| $CH_4$ | 0,0045 | $\alpha^* \frac{CO_2}{CH_4} = 59$ |
| $N_2$ | 0,0045 | |

Für die Qualität der Membranen ist es wichtig, möglichst frische Gießlösungen zu verwenden. Infolge der Kristallisationserscheinungen des Polyethersulfons fällt das Polymer nach einiger Zeit aus. Es wurden Membranen mit einer 24 h alten Gießlösung gezogen (kurz vor dem Ausfällen des Polyethersulfons). Fällbar war wiederum eine 0,4 %-ige methanolische Ethylcelluloselösung. Die Membranen wiesen jetzt zwar eine $CO_2/CH_4$-Selektivität von 128 auf, die $CO_2$-Permeabilität betrug aber nur noch 0,023 $m^3/m^2hbar$.

Beispiel 5:

Dieses Beispiel zeigt, daß die $CO_2$-Permeabilität auf Kosten der Selektivität erhöht werden kann, wenn der Anteil von 1,1,2-Trichlorethan in der Gießlösung erhöht wird. Fällbad war eine 0,4 %-ige Lösung von Ethylcellulose (Ethocel Stand.100, Dow Chemical) in Methanol. Die Membranen wurden bei 18°C gefällt.

Rezeptur der Gießlösung:

| | |
|---|---|
| Polyethersulfon "Victrex 4800 P" ......... | 14,4 Gew.-% |
| Dichlormethan ............................ | 35,9 Gew.-% |
| 1,1,2-Trichlorethan ...................... | 35,9 Gew.-% |
| Ameisensäure ............................. | 6,0 Gew.-% |
| Butanol-1 ................................ | 7,8 Gew.-% |

Die Trenneigenschaften der Membranen zeigt Tabelle 9 (Meßbedingungen 3,5 bar und 20°C):

| Gas | Permeabilität ($m^3/m^2hbar$) | Selektivität (-) |
|---|---|---|
| $N_2$ | 0,007 | |
| $CH_4$ | 0,007 | $\alpha^*$ $CO_2/CH_4$ = 43 |
| $CO_2$ | 0,302 | |

Werden die Membranen in reinem Methanol gefällt, so resultieren Membranen mit einer $CO_2/CH_4$-Selektivität von nur 7.

## Ansprüche

1. Verfahren zur Herstellung einer integralasymmetrischen Membran zur Trennung von Gasen voneinander, wobei Membranbildner, Lösungsmittel und/oder ein den Membranbildner nicht lösendes Mittel gemischt, flächenhaft ausgebreitet und mit einem Fällmittel in Kontakt gebracht werden, dadurch gekennzeichnet, daß ein Polymer, insbesondere Polyethersulfon als Membranbildner und ein halogenierter Kohlenwasserstoff als Lösungsmittel sowie ein aliphatischer Alkohol mit oder ohne einer aliphatischen Carbonsäure oder einem Alkylbenzol als nichtlösendes Mittel zusammengemischt werden.

2. Verfahren nach Anspruch 1, dadurch gekennzeichnet, daß die zusammengemischte, zu einem Film ausgestrichene Lösung in einer organischen, den Membranbildner ebenfalls nicht lösenden Flüssigkeit ausgefällt und anschließend in Luft oder einem inerten Gas getrocknet wird.

3. Verfahren nach Anspruch 1 und 2, dadurch gekennzeichnet, daß die fertige Membran, insbesondere deren trennwirksame Oberfläche, mit einem Elastomer überzogen wird.

4. Verfahren nach Anspruch 1 oder einem der folgenden, dadurch gekennzeichnet, daß als Lösungsmittel partiell halogenierte Kohlenwasserstoffe, insbesondere Dichlormethan, 1,1,2-Trichlorethan und/oder Chloroform verwendet werden.

5. Verfahren nach Anspruch 1 oder einem der folgenden, dadurch gekennzeichnet, daß als Mittel Ameisensäure, Essigsäure, Toluol, Xylol, Propanol-1, Propanol-2, Butanol-1, Butanol-2 oder Cyclohexanol verwendet wird.

6. Verfahren nach Anspruch 5, dadurch gekennzeichnet, daß die Konzentration des Mittels zwischen 3 und 25 Gew.-% ausgewählt wird.

7. Verfahren nach Anspruch 1 oder einem der folgenden, dadurch gekennzeichnet, daß als Flüssigkeit Methanol verwendet wird.

8. Verfahren zur Erhöhung der Selektivität einer Membran, insbesondere einer nach Anspruch 1 oder einem der folgenden hergestellten Membran, dadurch gekennzeichnet, daß durch Zugabe eines weiteren Polymers zur Flüssigkeit die in der Membran vorhandenen Fehlstellen mit diesem Polymer gefüllt werden.

9. Verfahren nach Anspruch 8, dadurch gekennzeichnet, daß als weiteres Polymer Ethylcellulose, Celluloseacetatpropionat oder Celluloseacetatbutyrat verwendet wird.

10. Membran nach dem Verfahren gemäß Anspruch 1 oder einem der folgenden, dadurch gekennzeichnet, daß sie als Platten-, Rohr-und Wickelmodule oder als Hohlfasern hergestellt sind.

Fig. 1

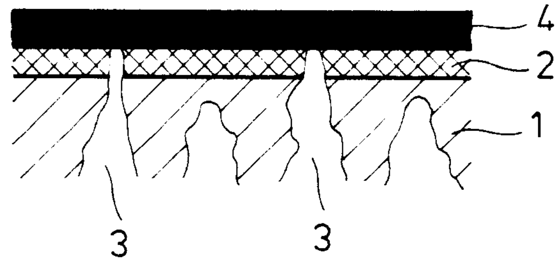


Fig. 2